(19) **Europäisches Patentamt / European Patent Office / Office européen des brevets**

(11) **EP 4 651 268 A1**

(12) # EUROPEAN PATENT APPLICATION
published in accordance with Art. 153(4) EPC

(43) Date of publication:
**19.11.2025 Bulletin 2025/47**

(21) Application number: **23917016.0**

(22) Date of filing: **31.07.2023**

(51) International Patent Classification (IPC):
*H01M 10/613* (2014.01)        *H01M 10/617* (2014.01)
*H01M 10/6556* (2014.01)      *H01M 10/6567* (2014.01)
*H01M 10/625* (2014.01)        *H01M 50/209* (2021.01)
*H01M 50/249* (2021.01)

(52) Cooperative Patent Classification (CPC):
**H01M 10/613; H01M 10/617; H01M 10/625;
H01M 10/6556; H01M 10/6567; H01M 50/209;
H01M 50/249; Y02E 60/10**

(86) International application number:
**PCT/CN2023/110292**

(87) International publication number:
**WO 2024/152544 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.01.2023 CN 202310072841**

(71) Applicant: **Xiamen Hithium Energy Storage
Technology Co., Ltd.
Xiamen, Fujian 361100 (CN)**

(72) Inventors:
• **WU, Zuyu
  Xiamen, Fujian 361100 (CN)**

• **LIU, Junjun
  Xiamen, Fujian 361100 (CN)**
• **WANG, Jianing
  Xiamen, Fujian 361100 (CN)**
• **YI, Ziqi
  Xiamen, Fujian 361100 (CN)**
• **CHEN, Weixin
  Xiamen, Fujian 361100 (CN)**
• **MA, Yaqiang
  Xiamen, Fujian 361100 (CN)**

(74) Representative: **DREISS Patentanwälte PartG
mbB
Friedrichstraße 6
70174 Stuttgart (DE)**

(54) **ENERGY STORAGE UNIT AND ENERGY STORAGE SYSTEM**

(57)    The present disclosure discloses an energy storage unit (100) and an energy storage system. The energy storage unit (100) includes an accommodating apparatus, a temperature adjusting structure (300) disposed on a bottom of the accommodating apparatus, and a temperature adjusting structure (400) disposed on the bottom of the accommodating apparatus. A plurality of battery cells (200) disposed in an inner cavity of the accommodating apparatus. The thermal conductive structure (300) includes a thermal conductive part (310) and a plurality of heat dissipation parts (320). A temperature equalizing cavity (10) is formed between the plurality of heat dissipation parts (320) and the temperature adjusting structure (400). The temperature adjusting structure (400) includes a heat dissipation flow channel and is configured to adjust a temperature of the energy storage unit (100) through the heat dissipation flow channel.

FIG. 1

EP 4 651 268 A1

**Description**

**CROSS-REFERENCES TO RELATED APPLICATIONS**

This application claims priority to Chinese Patent Application No. 202310072841.2, filed on January 17, 2023, the entire disclosures of which are incorporated herein by reference.

**FIELD**

The present disclosure relates to the technical field of battery cells, and in particular to an energy storage unit and an energy storage system.

**BACKGROUND**

A lithium battery cell is a current common energy storage apparatus in the field of new energy resources, and is widely applied in an electrical device such as a passenger car, a commercial vehicle, a special vehicle, a ship, an electrical bicycle, an electrical motorcycle, and an electrical scooter.

Generally speaking, energy stored in one battery cell cannot satisfy a high-power electricity demand of the electrical device. Therefore, it is usually necessary to integrate a plurality of battery cells to form a battery cell pack, an energy storage unit, an energy storage system, etc., so as to provide enough energy to supply power to the electrical device.

However, in the related art, in order to satisfy the electricity demand, it is necessary to integrate many battery cells into the energy storage unit, which will result in the following problems.

In the system, the battery cell generates heat and expands during charging/discharging. The heat generated by the battery cell cannot be discharged in time, resulting in excessive heat accumulated in the entire energy storage unit, which results in thermal runaway. In the related art, a liquid-cooling temperature adjusting technology is adopted to solve the thermal runaway of the energy storage unit. However, no temperature adjusting structure for the capacity of a battery core is designed intentionally in the current temperature adjusting apparatus, which results in the inability to balance the overall heat of the battery cell.

Based on the above-mentioned existing technical problems, the following technical solutions are produced.

**SUMMARY**

Embodiments of the present disclosure disclose an energy storage unit and an energy storage system, capable of solving the problem that the overall heat of a high-capacity battery cell cannot be balanced due to heat generated during charging/discharging.

In order to achieve the above-mentioned object, in a first aspect, the present disclosure discloses an energy storage unit, including an accommodating apparatus being hollow to form an inner cavity; a plurality of battery cells disposed in the inner cavity of the accommodating apparatus; a thermal conductive structure disposed on a bottom of the accommodating apparatus, the thermal conductive structure including a thermal conductive part and a plurality of heat dissipation parts, the thermal conductive part being located on a side facing towards the plurality of battery cells, and the plurality of heat dissipation parts being located on a side facing away from the plurality of battery cells; and a temperature adjusting structure disposed on a side of the thermal conductive structure facing away from the plurality of battery cells, a temperature equalizing cavity being formed between the plurality of heat dissipation parts and the temperature adjusting structure. The temperature adjusting structure includes a heat dissipation flow channel and is configured to adjust a temperature of the energy storage unit through the heat dissipation flow channel.

Optionally, the temperature adjusting structure is a temperature adjusting plate having a water inlet, and a water outlet. The heat dissipation flow channel is disposed on the temperature adjusting plate, and the heat dissipation flow channel is in communication with the water inlet and the water outlet. The water inlet and the water outlet are disposed on a same side of the temperature adjusting plate. The temperature adjusting plate is of a symmetric structure and has a symmetry midline. The heat dissipation flow channel is symmetrically distributed relative to the symmetry midline. A distance from the water inlet to the symmetry midline is equal to a distance from the water outlet to the symmetry midline.

Optionally, the heat dissipation flow channel is a circuitous flow channel.

Optionally, the circuitous flow channel includes a first flow channel group and a second flow channel group. The first flow channel group has an inlet end in communication with the water inlet, the second flow channel group has an outlet end in communication with the water outlet, and a connection between the first flow channel group and the second flow channel group is disposed on a same side as the water inlet and the water outlet.

Optionally, the first flow channel group includes a plurality of first flow channels, and the second flow channel group includes a plurality of second flow channels. The plurality of first flow channels is connected to the plurality of second flow channels in one-to-one correspondence. Each of the plurality of first flow channels has an inlet end in communication with the water inlet, and each of the plurality of second flow channels has an outlet end in communication with the water outlet.

Optionally, a circulation sectional area of the first flow channel group and a circulation sectional area of the second flow channel group both increase gradually from the water inlet to the water outlet in an extension direction of the circuitous flow channel.

Optionally, each of the first flow channel group and the second flow channel group includes a longitudinal-section pipeline and a transverse-section pipeline. The longitudinal-section pipeline and the transverse-section pipeline are alternately disposed. The longitudinal-section pipeline extends in a longitudinal direction, and the transverse-section pipeline extends in a transverse direction. The longitudinal direction intersects with the transverse direction. The transverse direction is a direction where the water inlet and the water outlet are sequentially located. A circulation sectional area of the longitudinal-section pipeline increases gradually from the water inlet to the water outlet, and a circulation sectional area of the transverse-section pipeline is consistent at each position.

Optionally, the accommodating apparatus includes a bottom plate, a top plate, two first side plates, and two second side plates. The two first side plates are opposite to each other in a first direction, the two second side plates are opposite to each other in a second direction. The first side plates and the second side plates are connected end to end. The bottom plate and the top plate are opposite to each other in a third direction. The two first side plates and the two second side plates are each located between the bottom plate and the top plate. The bottom plate, the top plate, the two first side plates and the two second side plates form the inner cavity of the accommodating cavity. The second direction is consistent with a width direction of the inner cavity of the accommodating apparatus, the first direction is consistent with a length direction of the inner cavity of the accommodating apparatus, and the third direction is consistent with a height direction of the accommodating apparatus. Each of the plurality of battery cells has two second surfaces that are opposite to each ohter in the first direction. The battery cell respectively abuts against the two first side plates through the two second surfaces. The accommodating apparatus satisfies: $1200mm \leq L100 \leq 5000mm$; and each of the plurality of battery cells satisfies: $300mm \leq L200 \leq 1200mm$; where $L200$ is a length dimension of each of the plurality of battery cells, and $L100$ is a length dimension of the inner cavity of the accommodating apparatus. A length direction of each of the plurality of battery cells and a length direction of the inner cavity of the accommodating apparatus are both consistent with the first direction.

Optionally, an arrangement of the plurality of battery cells satisfies: $1 \leq M \leq 4$; and $M \times L200 \leq L100$; where $M$ is a number of columns of the plurality of battery cells disposed in the first direction, and when $M>1$, second surfaces of two adjacent battery cells in the first direction are disposed to face towards each other.

Optionally, the plurality of battery cells are disposed and are juxtaposed in two columns in the first direction, the two columns of battery cells are disposed to face towards each other through the second surfaces. One column of battery cells are attached with one of the two first side plates through the second surfaces, and the other column of battery cells are attached to the other one of the two first side plate through the second surfaces.

Optionally, each of the plurality of battery cells satisfies: $150mm \leq H200 \leq 400mm$; and $H200 \leq H100$; where $H200$ is a height dimension of each of the plurality of battery cells, $H100$ is a height dimension of the inner cavity of the accommodating apparatus. A height direction of each of the plurality of battery cells is consistent with a height direction of the inner cavity of the accommodating apparatus.

Optionally, each of the plurality of battery cells is provided with poles. Each of the plurality of battery cells has a third surface located on a side of the battery cell facing away from the bottom plate. The poles are disposed on the third surface, and the poles of each of the plurality of battery cells are disposed to face towards the top plate.

Optionally, each of the plurality of battery cells further includes an explosion-proof valve disposed on the third surface.

Optionally, the poles include a positive pole and a negative pole which are sequentially arranged in the first direction. The energy storage unit further includes a first conductive member. The plurality of battery cells is arranged in a plurality of columns in the second direction. In one column of battery cells, the positive pole of one of two adjacent battery cells and the negative pole of the other one of the two adjacent battery cells correspond to each other in the second direction and are connected to each other through the first conductive member, and one column of battery cells are sequentially connected in series.

Optionally, each of the plurality of battery cells satisfies:

$50mm \leq D200 \leq 120mm$; where $D200$ is a thickness dimension of each of the plurality of battery cells, and a thickness direction of each of the plurality of battery cells is the second direction.

In a second aspect, the present disclosure discloses an energy storage system, including an energy storage unit, a base frame, a cooling chamber, and a power distribution chamber. The cooling chamber, the energy storage unit and the power distribution chamber are all disposed on the base frame. The cooling chamber is in communication with the energy storage unit to transmit a cooling medium to the energy storage unit. The power distribution chamber is electrically connected to the energy storage unit.

Optionally, a plurality of energy storage units is disposed in a third direction.

Compared with the related art, the present disclosure has the following advantageous effects.

According to a unique battery cell structure of a high-capacity battery cell, the temperature adjusting structure is optimized intentionally. An effect of mutual connection between the first flow channel group and the second flow channel group is adopted. Moreover, during design, the circulation sectional area of the circuitous flow channel from the first flow channel group to the second flow channel group in the thickness direction of the battery cell is larger and larger. Heat taken away by liquid-cooling water is higher at a position closer to the water outlet end, and therefore, the circulation sectional area closer to the water outlet end is set to be larger, which is beneficial to the overall balance of the heat of the battery cell.

In addition, considering that the energy density of the energy storage unit is increased as much as possible, the temperature adjusting structure is disposed on the bottom of the battery cell, so that it is unnecessary to dispose excessive limiting components in the thickness direction of the battery cell. By controlling the specification of the battery cell to improve the capacity of a single battery cell and reusing the accommodating apparatus, designs such as the limiting component of the battery cell and the connecting piece between the battery cells are reduced, then, the space utilization rate of the energy storage unit is increased, the overall weight of the energy storage unit is reduced, the material cost is reduced, and the assembly efficiency of the battery cell is increased.

## BRIEF DESCRIPTION OF DRAWINGS

In order to describe the technical solutions in the embodiments of the present disclosure more clearly, the accompanying drawings required for describing the embodiments will be briefly introduced below. Obviously, the accompanying drawings in the following description show only some embodiments of the present disclosure, and those of ordinary skill in the art may still derive other accompanying drawings from these accompanying drawings without inventive work.

FIG. 1 is an exploded view of an energy storage unit disclosed by the present disclosure;
FIG. 2 is an overall structural view of an energy storage unit disclosed by the present disclosure;
FIG. 3 is an enlarged view of part I in FIG. 2;
FIG. 4 is an internal structural view of an energy storage unit disclosed by the present disclosure;
FIG. 5 is an enlarged view of part II in FIG. 4;
FIG. 6 is a structural view of a battery cell disclosed by the present disclosure;
FIG. 7 is a front structural view of a temperature adjusting structure disclosed by the present disclosure;
FIG. 8 is a back structural view of a temperature adjusting structure disclosed by the present disclosure;
FIG. 9 is an exploded view of a honeycomb plate disclosed by the present disclosure;
FIG. 10 is a structural view of a honeycomb plate disclosed by the present disclosure; and
FIG. 11 is a structural view of an energy storage system disclosed by the present disclosure.

Description for reference numerals in the accompanying drawings:

X-first direction, Y-second direction, and Z-third direction,
100-energy storage unit,
110-first side plate, 120-second side plate, 130-bottom plate, 140-top plate, 150-honeycomb plate, 151-honeycomb through hole part, 152-first sealing plate part, 153-second sealing plate part,
200-battery cell,
210-pole, 220-explosion-proof valve, 201-first surface, 202-second surface, 203-third surface,
300-thermal conductive structure,
310-thermal conductive part, 320-heat dissipation part, 321-convex tooth, 10-temperature equalizing cavity,
400-temperature adjusting structure,
410-water inlet, 420-water outlet,
500-first conductive member,
600-base frame,
700-cooling chamber,
800-power distribution chamber.

## DESCRIPTION OF EMBODIMENTS

Technical solutions in the embodiments of the present disclosure will be described clearly and completely below in conjunction with the accompanying drawings in the embodiments of the present disclosure. Obviously, the described embodiments are only a part of the embodiments of the present disclosure, not all the embodiments. Based on the embodiments in the present disclosure, all other embodiments obtained by those of ordinary skill in the art without inventive work shall fall within the protection scope of the present disclosure.

In the present disclosure, directional or positional relationships indicated by terms such as "on", "under", "left", "right", "front", "rear", "top", "bottom", "inner", "outer", "vertical", "horizontal", "transverse" and "longitudinal" are based on directional or positional relationships as shown in the accompanying drawings. These terms are mainly for the purpose of better describing the present disclosure and the embodiments thereof, rather than limiting that an indicated apparatus, element or component has to have a specific direction or be constructed and operated in the specific direction.

Moreover, parts of the above-mentioned terms may be further used for representing other meanings in addition to the directional or positional relationships, for example, the term "on" may also be used for representing a certain attachment or connection relationship in some cases. Those of ordinary skill in the art can understand the specific meanings of these terms in the present disclosure according to specific situations.

In addition, the terms "mounted", "disposed", "provided with", "connection" and "connected" should be understood in a broad sense, for example, "connection" may be fixed connection or detachable connection or an integral structure, may be mechanical connection or electrical connection, may be direct connection or indirect connection through an intermediate medium, and may be internal communication between two apparatuses, elements or components. Those of ordinary skill in the art may understand the specific meanings of the above-mentioned terms in the present disclosure according to specific situations.

In addition, terms such as "first" and "second" are mainly intended to distinguish different apparatuses, elements or components (of which the specific types and structures may be same or different), rather than to indicate or imply the relative importance and number of the indicated apparatuses, elements or components. Unless otherwise specified, "a plurality of" means two or more.

In the related art, an energy storage apparatus consisting of battery cells is widely applied in an electrical device such as a passenger car, a commercial vehicle, a special vehicle, a ship, an electrical bicycle, an electrical motorcycle, and an electrical scooter. In order to satisfy an electricity demand, it is necessary to integrate more battery cells into an energy storage unit, which will result in the following problems.

The battery cell generates heat and expands during charging/discharging, and the heat generated by the battery cell cannot be discharged in time, resulting in excessive heat accumulated in the entire energy storage unit, which causes thermal runaway. In the related art, a liquid-cooling temperature adjusting technology is adopted to solve the thermal runaway of the energy storage unit. However, no temperature adjusting structure for the capacity of a battery core is designed intentionally in the current temperature adjusting apparatus, which results in the inability to balance the overall heat of the battery cell.

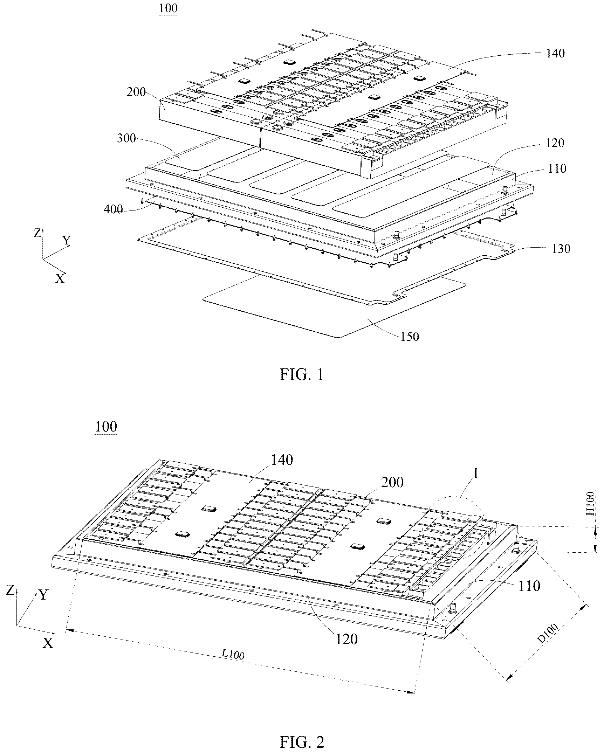

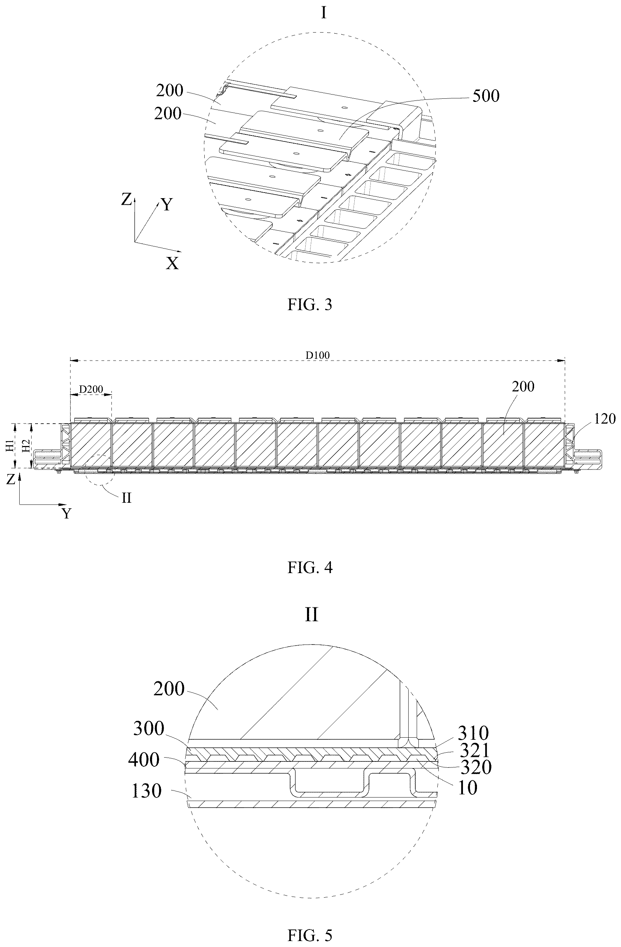

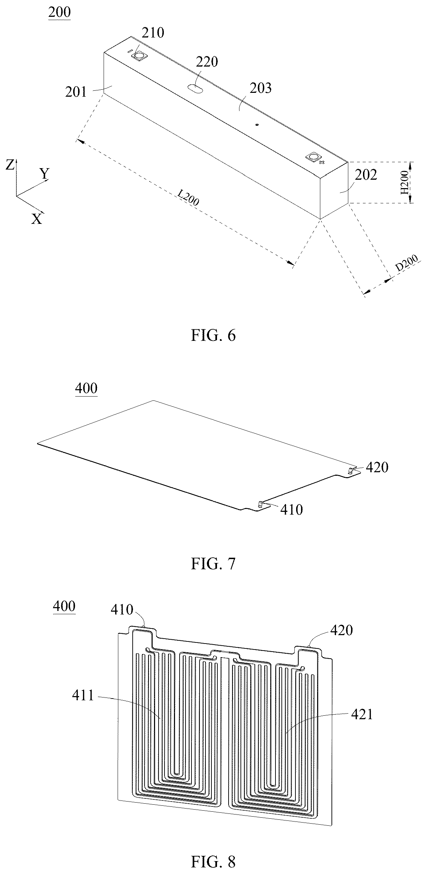

The object of the present disclosure is just to solve the above-mentioned problems. The following details will be described in conjunction with FIG. 1 to FIG. 11.

Refer to FIG. 1 to FIG. 10, the present disclosure discloses an energy storage unit 100 which may be a battery pack, a battery pack module, etc. The energy storage unit 100 may include an accommodating apparatus, battery cells 200, a thermal conductive structure 300, and a temperature adjusting structure 400.

The accommodating apparatus is a mounting foundation of the energy storage unit 100, and is hollow to form an inner cavity.

The plurality of battery cells 200 may be disposed in the inner cavity of the accommodating apparatus. The plurality of battery cells forms a series or parallel loop, the plurality of battery cells is connected in series or parallel by a busbar to form a loop, and the entire loop includes a total positive electrode and a total negative electrode.

The thermal conductive structure 300 may be disposed on a bottom of the accommodating apparatus. The thermal conductive structure 300 includes a thermal conductive part 310 and a plurality of heat dissipation parts 320. The thermal conductive part 310 is located on a side facing towards the battery cells 200 and is in surface contact with bottoms of the battery cells, and the heat dissipation parts 320 are located on a side facing away from the battery cells.

The temperature adjusting structure 400 may be disposed on a side of the thermal conductive structure 300 facing away from the battery cells 200. A temperature equalizing cavity 10 is formed between the heat dissipation parts 320 and the temperature adjusting structure 400. The temperature adjusting structure 400 includes a heat dissipation flow channel and is configured to adjust a temperature of the energy storage unit 100 through the heat dissipation flow channel.

In the present disclosure, the temperature adjusting structure 400 cooperates with the thermal conductive structure 300 to achieve temperature control on the energy storage unit. Specifically speaking, heat generated by the battery cells 200 will be transferred to the heat dissipation parts 320 by the thermal conductive part 310 and is then conducted to the temperature equalizing cavity 10 by the heat dissipation parts 320 so as to be accumulated, then, the heat accumulated in the temperature equalizing cavity 10 is taken out by the temperature adjusting structure 400, thus, the heat of the battery cells 200 is dissipated, and then, temperature control on the energy storage unit is achieved.

In the present preferred embodiment, the thermal conductive structure 300 preferably adopts a thermal conductive plate formed by integrated punching and molding. The thermal conductive plate faces towards a side of the temperature adjusting structure 400. The heat dissipation parts 320 are formed by combining a plurality of juxtaposed convex teeth 321, the temperature equalizing cavity 10 is formed between the adjacent convex teeth 321, and the convex teeth 321 are in contact with the temperature adjusting structure 400. On one hand, the convex teeth 321 may be used as convex ribs of the thermal conductive plate and may strengthen a stress of the thermal conductive plate to support the plurality of battery cells. On the other hand, the thermal conductive part 310 is in large-surface contact with the battery cells, the heat generated by the battery cells may be conducted to the heat dissipation parts 320 by the thermal conductive part 310, the heat dissipation parts 320 and the temperature adjusting structure 400 form the above-mentioned temperature equalizing cavity 10, and sharp corner ends of the convex teeth 321 are in surface-line contact with the temperature adjusting structure, so that the contact surface is reduced. By such a design, the problem that heat accumulated in the battery cells is increased due to conduction of heat from the temperature adjusting structure 400 or the outside to the battery cells can be solved.

In another preferred embodiment, a honeycomb plate 150 may be added outside the accommodating apparatus loading the energy storage unit. The honeycomb plate 150 includes a plurality of honeycomb through hole parts 151 in the middle as well as a first sealing plate part 152 and a second sealing plate part 153 which are disposed on two sides, to approximately form a plate-like body with a three-layer structure. The honeycomb plate 150 is disposed on a side, facing away from the battery cells 200, on the bottom of the accommodating apparatus, that is, the honeycomb plate 150 is disposed on a side of a bottom plate 130 mentioned hereinafter facing away from the battery cells 200. The first sealing plate part 152, the plurality of honeycomb through hole parts 151 and the second sealing plate part 153 are sequentially disposed in a direction away from the bottom plate 130. With the honeycomb plate 150, the situation that heat outside the energy storage unit enters the inside of the energy storage unit to bring excess heat for the battery cells 200 can be effectively avoided.

In the present embodiment, the temperature adjusting structure 400 may be a temperature adjusting plate including a water inlet 410 and a water outlet 420. The heat dissipation flow channel is in communication with the water inlet 410 and the water outlet 420. The water inlet 410 and the water outlet 420 are located on a same side of the temperature adjusting plate.

It can be seen that water, a coolant, etc., are adopted as a cooling medium to achieve heat dissipation of the energy storage unit in the present disclosure. Specifically speaking, the cooling medium enters from the water inlet 410, flows through the heat dissipation flow channel, and sufficiently performs heat exchange in the heat dissipation flow channel with the heat accumulated in the temperature equalizing cavity 10, and is then discharged from the water outlet 420, and thus, heat dissipation is achieved.

In the above-mentioned design, the water inlet 410 and the water outlet 420 are located on the same side, which facilitates later maintenance and replacement. Specifically speaking, since the water inlet and the water outlet are located on the same side, an end plate on one side is only required to be disassembled during maintenance. Compared with a different-side location manner in which two ends are required to be disassembled, the same-side location manner has an increase in replacement efficiency and facility in operation. At the same time, it is unnecessary to drag pipelines of loops between an external liquid cooling unit and the water inlet 410 and the water outlet 420 to two sides. In this way, the lengths of connected pipelines can also be reduced.

At the same time, the temperature adjusting plate may be set as a symmetric structure and has a symmetry midline. The heat dissipation flow channel is symmetrically distributed relative to the symmetry midline. A distance from the water inlet 410 to the symmetry midline is equal to a distance from the water outlet 420 to the symmetry midline. In this way, the entire apparatus can perform heat dissipation more uniform for the battery cells, and the situation of local undercooling or overheating can be avoided.

In the present embodiment, the heat dissipation flow channel may be a circuitous flow channel. With such circuitous arrangement, the circulation process and the circulation time of the cooling medium in the heat dissipation flow channel in the temperature adjusting structure 400 can be improved, so that the cooling medium more sufficiently performs heat exchange with the battery cells 200, and then, the heat dissipation property of the energy storage unit is improved.

In the present embodiment, the circuitous flow channel may include a first flow channel group 411 and a second flow channel group 421. An inlet end of the first flow channel group 411 is in communication with the water inlet 410, an outlet end of the second flow channel group 421 is in communication with the water outlet 420, and a connection between the first flow channel group 411 and the second flow channel group 421 is disposed on the same side as the water inlet 410 and the water outlet 420. Such a design enables the circuitous flow channel to be spread and distributed on the temperature adjusting structure 400 of a temperature adjusting plate structure as flat as possible, improves the layout rationality, and is more beneficial to the achievement of heat dissipation.

Optionally, the first flow channel group 411 includes a plurality of first flow channels, and the second flow channel group 421 includes a plurality of second flow channels. The first flow channels are connected to the second flow channels in one-to-one correspondence. An inlet end of each first flow channel is in communication with the water inlet 410, and an outlet end of each second flow channel is in communication with the water outlet 420. Thus, a coolant entering from the water inlet 410 will enter each first flow channel after being shunted to perform heat exchange, then enter the second flow channel, and is finally discharged from the water outlet 420 after being converged. In this way, the first flow channel group

411 and the second flow channel group 421 will have larger spread area on the temperature adjusting plate, so that sufficient and balanced heat dissipation is performed on the battery cells 200, and then, the heat dissipation balance of the apparatus in the present disclosure is improved.

In the present embodiment, the first flow channel group 411 and the second flow channel group 421 are mirrored each other and are symmetrically distributed relative to the symmetry midline. For example, each of the first flow channel group 411 and the second flow channel group 421 is shown as a U-shaped loop, a C-shaped loop, an S-shaped loop, etc., and the circulation sectional area of the first flow channel group 411 and the circulation sectional area of the second flow channel group 421 both increase gradually from the water inlet 410 to the water outlet 420 in an extension direction of the circuitous flow channel.

It is known that heat taken away by the cooling medium is higher at a position closer to the water outlet 420 during heat dissipation, and therefore, the circulation sectional area closer to the water outlet 420 is set to be larger, which is beneficial to the overall balance of the heat of the battery cells and more effective improvement on the heat dissipation property of the energy storage unit.

Optionally, with a pipeline of the U-shaped loop as an example, each of the first flow channel group 411 and the second flow channel group 421 includes a longitudinal-section pipeline and a transverse-section pipeline. The longitudinal-section pipeline and the transverse-section pipeline are alternately disposed. The longitudinal-section pipeline extends in a longitudinal direction, the transverse-section pipeline extends in a transverse direction, and the longitudinal direction intersects with the transverse direction. The transverse direction is a direction where the water inlet 410 and the water outlet 420 are sequentially arranged. The circulation sectional area of the longitudinal-section pipeline increases gradually from the water inlet 410 to the water outlet 420, and the circulation sectional area of the transverse-section pipeline is consistent at each position.

Generally speaking, a length of the longitudinal-section pipeline is greater than a length of the transverse-section pipeline, so the design that the pipe diameter gradually increases is only performed on the longitudinal-section pipeline. In this way, the structural complexity can be simplified while the heat dissipation property of the energy storage unit is improved, then, the process cost is reduced, it is more beneficial to the heat dissipation of the battery cells, and then, the heat dissipation property of the energy storage unit is improved.

In the present embodiment, the accommodating apparatus may include a bottom plate 130, a top plate 140, two first side plates 110, and two second side plates 120. The two first side plates 110 are opposite to each other in a first direction X, the two second side plates 120 are opposite to each other in a second direction Y, and the first side plates 110 and the second side plates 120 are connected end to end. The bottom plate 130 and the top plate 140 are opposite to each other in a third direction Z. The first side plates 110 and the second side plates 120 are both located between the bottom plate 130 and the top plate 140. The bottom plate 130, the top plate 140, the first side plates 110 and the second side plates 120 form the inner cavity of the accommodating cavity. The first direction X, the second direction Y and the third direction Z intersect in pairs. The second direction Y is consistent with a width direction of the inner cavity of the accommodating apparatus, the first direction X is consistent with a length direction of the inner cavity of the accommodating apparatus, and the third direction Z is consistent with the height direction of the inner cavity of the accommodating apparatus.

The battery cells 200 may be disposed in the inner cavity. Each of the battery cells 200 has two second surfaces 202 that are opposite to each other in the first direction X. The battery cells 200 abut against the two first side plates 110 through the second surfaces 202. "Abut against" described herein may mean that the second surfaces 202 are in direct contact with and attached to the first side plates 110 or are adhered by dispensing an adhesive. Generally speaking, when only one battery cell 200 is disposed in the first direction X, the two second surfaces 202 of the battery cell 200 respectively abut against the two first side plates 110. When a plurality of battery cells 200 is disposed in the first direction X, the two first side plates 110 are respectively recorded as a first sub-side plate and a second sub-side plate, the battery cell 200 close to the first sub-side plate in the plurality of battery cells 200 abuts against the first sub-side plate through the second surfaces 202, and the battery cell 200 close to the second sub-side plate in the plurality of battery cells 200 abuts against the second sub-side plate through the second surfaces 202.

Thus, the accommodating apparatus may be reused. Specifically speaking, the accommodating apparatus not only accommodates the battery cells 200, but also limit the battery cells 200 by abutting against the two first side plates 110, thereby avoiding the battery cells 200 from expanding during use.

In this way, by limiting and restricting the battery cells 200 through the first side plates 110, limiting components can be reduced. Therefore, materials are reduced in the first direction X, and the layout space of the battery cells 200 is increased.

At the same time, the accommodating apparatus may satisfy:

1200mm $\leq$ L100 $\leq$ 5000mm. For example, L100=1200mm, 2000mm, 2500mm, 3000mm, 3500mm, 4000mm, 4500mm, 5000mm, etc.

Each of the battery cells 200 may satisfy:

300mm$\leq$L200$\leq$ 1200mm. For example, L200=300mm, 500mm, 700mm, 1000mm, 1200mm, etc.

L200 is a length dimension of each battery cell 200, and L100 is a length dimension of the inner cavity of the accommodating apparatus. A length direction of each battery cell 200 and the length direction of the inner cavity of the accommodating apparatus are both consistent with the first direction X.

Due to such a design range, a higher matching degree between the accommodating apparatus and the battery cells 200 is kept in the first direction X, the layout number of the battery cells 200 in the first direction X is further reduced, then, the number of connecting pieces disposed between the battery cells 200 is reduced, the space utilization rate is increased, and the energy density is increased.

In summary, in the present disclosure, by controlling the specification of the battery cell 200 to improve the capacity of a single battery cell 200 and reusing the accommodating apparatus, designs such as the limiting components of the battery cells 200 and the connecting pieces between the battery cells 200 are reduced, then, the space utilization rate of the energy storage unit is increased, the overall weight of the energy storage unit is reduced, the material cost is reduced, and the assembly efficiency of the battery cells is increased.

Optionally, the arrangement of the battery cells 200 may satisfy:

$1 \leq M \leq 4$; for example, M=1, 2, 4, etc. and

$$M \times L200 \leq L100.$$

M is the number of columns of the battery cells 200 disposed in the first direction X. Thus, by controlling the number of the battery cells 200, subsequent unit and system maintenance is further facilitated while the sufficient electric capacity and space utilization rate are guaranteed.

Optionally, when M> 1, the second surfaces 202 of two adjacent battery cells 200 in the first direction X are disposed to face towards each other. For example, the second surfaces 202 of two battery cells 200 are attached to each other, and in this way, the space utilization rate can be further increased; or the second surfaces 202 of two battery cells 200 are spaced apart from each other, and in this way, a gap can be reserved for adhesive fixation, expansion buffer, etc., so that the battery cells 200 work better, and the safety performance is improved.

Optionally, each battery cell 200 may satisfy: $1 \leq M \leq 2$. Therefore, the electric capacity of the energy storage unit and the layout rationality of the battery cells 200 are further taken into account.

Optionally, the plurality of battery cells 200 may be disposed and juxtaposed in two columns in the first direction X. The two columns of battery cells 200 are disposed to face towards each other through the second surfaces 202. One column of battery cells 200 are attached to one of the two first side plates 110 through the second surfaces 202, and the other column of battery cells 200 are attached to the other one of the two first side plate 110 through the second surfaces 202. Thus, the electric capacity of the energy storage unit can be further increased, the layout space of the battery cells 200 in the first direction X can be increased, and the space utilization rate of the battery cells 200 is further increased in the first direction X of the accommodating apparatus.

Optionally, each battery cell 200 may include two first surfaces 201 that are opposite to each other in the second direction Y, and the first surfaces 201 and the second surfaces 202 are connected end to end. The battery cells 200 are disposed in a plurality of columns in the second direction Y. The second direction Y is consistent with the width direction of the inner cavity of the accommodating apparatus. The first surfaces 201 of two adjacent battery cells 200 in the same column are disposed to face towards each other, for example, the first surfaces 201 of the two adjacent battery cells 200 are attached to each other to increase the space utilization rate, or the first surfaces 201 of the two adjacent battery cells 200 are spaced apart from each other to reserve a gap for adhesive fixation, expansion buffer, etc.

At the same time, the two second side plates 120 abut against respective columns of battery cells 200 through the first surfaces 201. For example, the second side plates 120 and the first surfaces 201 are attached to each other or are spaced apart from each other to reserve a gap for adhesive fixation, expansion buffer, etc.

Thus, the accommodating apparatus may be further reused. Specifically speaking, the accommodating apparatus limits the battery cells 200 in the second direction Y through the second side plates 120 while accommodating the battery cells 200. In this way, the number of the limiting components disposed for the battery cells 200 is reduced in the second direction Y, and the battery cells 200 can be limited and restricted through the second side plates 120. Therefore, materials on the side plates are reduced in the second direction Y, and the layout space of the battery cells is increased.

Optionally, each battery cell 200 may satisfy: $90\% \leq N \times D200/D100 < 100\%$; for example, $N \times D200/D100 = 90\%$, 95%, 99%, etc. N is the number of one column of battery cells 200 arranged in the second direction Y, D200 is a thickness dimension of each battery cell 200, D100 is a width dimension of the inner cavity of the accommodating apparatus, and the thickness direction of each battery cell 200 and the width direction of the inner cavity of the accommodating apparatus both are the second direction Y. $N \times D200/D100 < 100\%$, for example, $N \times D200/D100 = 90\%$ may be understood as that the battery cells 200 and the second side plates 120 are spaced apart from each other to reserve an expansion buffer gap or for dispensing an adhesive for fixation.

Optionally, each battery cell 200 may satisfy: 10≤N≤14, for example, N=10, 12, 14, etc. N×D200 < D100, where D100 is a length dimension of the inner cavity of the accommodating apparatus, and the thickness direction of each battery cell 200 and the length of the inner cavity of the accommodating apparatus both are the second direction Y. In this way, the accommodating apparatus can avoid overload, caused by excessive battery cells 200, of the energy storage unit and control the number of materials such as the connecting pieces and the limiting components while accommodating a sufficient number of battery cells 200 to ensure the electric capacity.

Optionally, each battery cell 200 may satisfy:

150mm≤H200≤400mm; for example, H200=150mm, 200mm, 300mm, 400mm, etc.; and H200≤≤H100.

H200 is a height dimension of each battery cell 200, H100 is a height dimension of the inner cavity of the accommodating apparatus, and a height direction of each battery cell 200 is consistent with the height direction of the inner cavity of the accommodating apparatus, and both of them are the third direction Z. Thus, the size of a mainstream accommodating apparatus on a user side can be adapted while the capacity of the battery cells 200 is guaranteed, so that the space of a system in the third direction Z is more sufficiently utilized, and the space utilization rate is further increased.

Optionally, the first surfaces 201 satisfy:

S1=L200 × H200, where S1 is the area of the first surface 201.

Thus, for the battery cell 200 with the above-mentioned length and height dimensions, the heat dissipation area of the battery cell 200 on the first surfaces 201 can be increased. When the battery cells 200 in the energy storage unit are arranged in a manner that the first surfaces 201 are arranged close to each other, due to the larger heat dissipation area, a gap between the first surfaces 201 of the battery cells can be narrowed and even attached, and the space utilization rate of the energy storage unit can be increased while performances of the battery cells are guaranteed.

Optionally, the two adjacent battery cells 200 in the first direction X may be fixed by an adhesive, so that the connection stability is improved, and no extra space is taken up.

Optionally, each battery cell 200 may be provided with poles 210 that are used to enable the battery cell 200 to achieve electrical energy conduction. Each battery cell 200 has a third surface 203 located on a side of the battery cell 200 facing away from the bottom plate 130. The two second surfaces 202 are respectively connected to two opposite sides of the third surface 203. The poles 210 are arranged on the third surface 203. The poles 210 of each battery cell 200 are arranged to face towards the top plate 140. Thus, an electrical connection between the battery cells 200 is facilitated, and it is convenient for the energy storage unit to achieve electrical conduction through the battery cells 200, so that the layout rationality of the energy storage unit is improved.

Optionally, each battery cell 200 further includes an explosion-proof valve 220, and the explosion-proof valve 220 and the poles 210 are both arranged on the third surface 203. In this way, explosive removal can be conveniently performed on the battery cells 200, and the layout rationality of the battery cells 200 is further improved.

Optionally, the poles 210 may include a positive pole and a negative pole which are sequentially arranged in the first direction X.

The energy storage unit 100 may further includes a first conductive member 500. The battery cells 200 are disposed in a plurality of columns in the second direction Y. In one column of battery cells 200, the positive pole of one of two adjacent battery cells 200 and the negative pole of the other one of the two adjacent battery cell 200 correspond to each other in the second direction Y and are connected to each other through the first conductive member 500, and the one column of battery cells 200 is sequentially connected in series. In the present embodiment, the first conductive member 500 preferably adopts a busbar.

In this way, an electrical connection between the plurality of battery cells 200 in the energy storage unit is facilitated. Moreover, a connection manner is simple, no greater space is taken up, and the space utilization rate of the battery cells 200 in the energy storage unit is further improved.

Optionally, each battery cell 200 may satisfy:

50mm ≤ D200 ≤ 120mm. For example, D200=50mm, 60mm, 80mm, 100mm, 120mm, etc.

D200 is a thickness dimension of each battery cell 200, and the thickness direction of each battery cell 200 and the width direction of the inner cavity of the accommodating apparatus both are the second direction Y. When the battery cell 200 has a thickness within this range, heat accumulated by the battery cell 200 in the thickness direction can be dissipated in time, so that the situation that the performance of the battery cell is affected by an overhigh temperature difference in the thickness direction due to heat accumulation can be avoided.

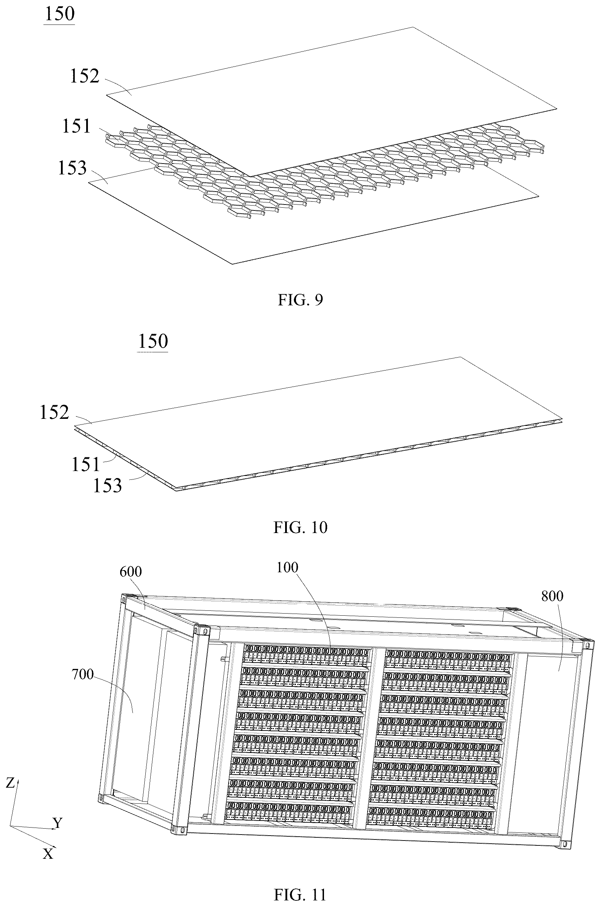

Refer to FIG. 11, the present disclosure further discloses an energy storage system which may include the energy storage unit 100. The capacity of the energy storage system can be adjusted by increasing the number of the energy storage unit 100 and the number of battery cells in each column in the energy storage unit 100, so that the energy storage system has better adjustability. At the same time, by adopting the energy storage unit 100 in the present disclosure, the energy storage system can also be more compact in structure.

Optionally, the energy storage system may further include a base frame 600, a cooling chamber 700, and a power distribution chamber 800. The cooling chamber 700, the energy storage unit 100 and the power distribution chamber 800 are all disposed on the base frame 600. The cooling chamber 700 is in communication with the energy storage unit 100 so as to transmit a cooling medium to the energy storage unit 100. For example, when air cooling is adopted, the cooling medium is air; and when liquid cooling is adopted, the cooling medium is a coolant, etc., so that the energy storage unit 100 is cooled. The power distribution chamber 800 is electrically connected to the energy storage unit 100 so as to achieve the electrical conduction of the energy storage unit 100.

In the present embodiment, the process that the power distribution chamber 800 is electrically connected to the energy storage unit 100 includes: an input air switch of a UPS of the power distribution chamber 800 is led to an input terminal of the UPS, and an output terminal of the UPS is connected to an output air switch of the power distribution chamber 800, and the energy storage unit 100 is connected to a lower part of the input air switch. The connection of the energy storage unit 100 is that respective sections are connected in series to form a group. If there are two or more groups, it is necessary to connect one group to another group in parallel and then connect two wires from the groups to an energy storage unit terminal of the UPS.

Optionally, a plurality of energy storage units 100 may be disposed in a third direction Z, and a first direction X, a second direction Y and the third direction Z intersect in pairs. By adopting a manner that the energy storage units 100 are stacked in a height direction, the layout rationality of an overall structure of the energy storage system can be improved while the electric capacity of the energy storage system can be improved.

Optionally, the cooling chamber 700, the plurality of energy storage units 100 and the power distribution chamber 800 may be sequentially arranged in the first direction X, so that the layout rationality is improved.

The present disclosure further discloses an electrical device which may include an energy storage system. The electrical device may be a passenger car, a commercial vehicle, a special vehicle, a ship, an electrical bicycle, an electrical motorcycle, and an electrical scooter, the details of which will be omitted herein.

Finally, it should be noted that the above-mentioned embodiments are only used to illustrate the technical solutions of the present disclosure, rather than to limit them. Although the present disclosure has been described in detail with reference to the aforementioned embodiments, it should be understood by those of ordinary skill in the art that it is still possible to modify the technical solutions recorded in the aforementioned embodiments or equivalently substitute parts or all of technical features thereof, but these modifications or substitutions do not enable the essences of corresponding technical solutions to depart from the scope of the technical solutions in all the embodiments of the present disclosure.

**Claims**

1.    An energy storage unit (100), comprising:

an accommodating apparatus being hollow to form an inner cavity;
a plurality of battery cells (200) disposed in the inner cavity of the accommodating apparatus;
a thermal conductive structure (300) disposed on a bottom of the accommodating apparatus, the thermal conductive structure (300) comprising a thermal conductive part (310) and a plurality of heat dissipation parts (320), the thermal conductive part (310) being located on a side facing towards the plurality of battery cells (200), and the plurality of heat dissipation parts (320) being located on a side facing away from the plurality of battery cells (200); and
a temperature adjusting structure (400) disposed on a side of the thermal conductive structure (300) facing away from the plurality of battery cells (200), a temperature equalizing cavity (10) being formed between the plurality of heat dissipation parts (320) and the temperature adjusting structure (400), and the temperature adjusting structure (400) comprising a heat dissipation flow channel and being configured to adjust a temperature of the energy storage unit (100) through the heat dissipation flow channel.

2.    The energy storage unit according to claim 1, wherein the temperature adjusting structure (400) is a temperature adjusting plate having a water inlet (410) and a water outlet (420), the heat dissipation flow channel is in communication with the water inlet (410) and the water outlet (420),

the water inlet (410) and the water outlet (420) are located on a same side of the temperature adjusting plate, the temperature adjusting plate is of a symmetric structure and has a symmetry midline, the heat dissipation flow channel is symmetrically distributed relative to the symmetry midline, and a distance from the water inlet (410) to the symmetry midline is equal to a distance from the water outlet (420) to the symmetry midline.

3.    The energy storage unit according to claim 2, wherein the heat dissipation flow channel is a circuitous flow channel.

4.    The energy storage unit according to claim 3, wherein the circuitous flow channel comprises a first flow channel group (411) and a second flow channel group (421), the first flow channel group (411) having an inlet end in communication with the water inlet (410), the second flow channel group (421) having an outlet end in communication with the water outlet (420), and a connection between the first flow channel group (411) and the second flow channel group (421) being disposed on a same side as the water inlet (410) and the water outlet (420).

5. The energy storage unit according to claim 4, wherein:

   the first flow channel group (411) comprises a plurality of first flow channels and the second flow channel group (421) comprises a plurality of second flow channels;
   the plurality of first flow channels is connected to the plurality of second flow channels in one-to-one correspondence, each of the plurality of first flow channels having an inlet end in communication with the water inlet (410), and each of the plurality of second flow channels having an outlet end in communication with the water outlet (420).

6. The energy storage unit according to claim 4, wherein a circulation sectional area of the first flow channel group (411) and a circulation sectional area of the second flow channel group (421) both increase gradually from the water inlet (410) to the water outlet (420) in an extension direction of the circuitous flow channel.

7. The energy storage unit according to claim 6, wherein each of the first flow channel group (411) and the second flow channel group (421) comprises a longitudinal-section pipeline and a transverse-section pipeline, the longitudinal-section pipeline and the transverse-section pipeline being alternately disposed, the longitudinal-section pipeline extending in a longitudinal direction, the transverse-section pipeline extending in a transverse direction, the longitudinal direction intersecting with the transverse direction, the transverse direction being a direction where the water inlet (410) and the water outlet (420) are sequentially located,
   wherein a circulation sectional area of the longitudinal-section pipeline increases gradually from the water inlet (410) to the water outlet (420), a circulation sectional area of the transverse-section pipeline being consistent at each position.

8. The energy storage unit according to claim 1, wherein:

   the accommodating apparatus comprises a bottom plate (130), a top plate (140), two first side plates (110), and two second side plates (120),
   the two first side plates (110) are opposite to each other in a first direction (X) and the two second side plates (120) are opposite to each other in a second direction (Y), the first side plates (110) and the second side plates (120) being connected end to end;
   the bottom plate (130) and the top plate (140) are opposite to each other in a third direction (Z) and the two first side plates (110) and the two second side plates (120) are each located between the bottom plate (130) and the top plate (140), the bottom plate (130), the top plate (140), the two first side plates (110) and the two second side plates (120) forming the inner cavity of the accommodating cavity, the second direction (Y) being consistent with a width direction of the inner cavity of the accommodating apparatus, the first direction (X) being consistent with a length direction of the inner cavity of the accommodating apparatus, and the third direction (Z) being consistent with a height direction of the accommodating apparatus;
   each of the plurality of battery cells (200) has two second surfaces (202), the two second surfaces (202) being opposite to each other in the first direction (X), the battery cell (200) respectively abutting against the two first side plates (110) through the two second surfaces (202);
   the accommodating apparatus satisfies:

$$1200\text{mm} \leqslant L100 \leqslant 5000\text{mm};$$

   each of the plurality of battery cells (200) satisfies:

$$300\text{mm} \leqslant L200 \leqslant 1200\text{mm};$$

   where L200 is a length dimension of each of the plurality of battery cells (200) and L100 is a length dimension of the inner cavity of the accommodating apparatus, a length direction of each of the plurality of battery cells (200) and a length direction of the inner cavity of the accommodating apparatus being both consistent with the first direction (X).

9. The energy storage unit (100) according to claim 8, wherein an arrangement of the plurality of battery cells (200) satisfies:

$$1 \leqslant M \leqslant 4; \text{ and } M \times L200 \leqslant L100;$$

where M is a number of columns of the plurality of battery cells (200) disposed in the first direction (X), and when M> 1, second surfaces (202) of two adjacent battery cells (200) in the first direction (X) are disposed to face towards each other.

10. The energy storage unit (100) according to claim 9, wherein:

the plurality of battery cells (200) are disposed and are juxtaposed in two columns in the first direction (X), the two columns of battery cells (200) being disposed to face towards each other through the second surfaces (202), one column of battery cells (200) are attached to one of the two first side plates (110) through the second surfaces (202), and the other column of battery cells (200) are attached to the other one of the two first side plate (110) through the second surfaces (202).

11. The energy storage unit (100) according to claim 8, wherein each of the plurality of battery cells (200) satisfies:

$$150\text{mm} \leqslant H200 \leqslant 400\text{mm}; \text{ and } H200 \leqslant H100;$$

where H200 is a height dimension of each of the plurality of battery cells (200) and H100 is a height dimension of the inner cavity of the accommodating apparatus, a height direction of each of the plurality of battery cells (200) being consistent with a height direction of the inner cavity of the accommodating apparatus.

12. The energy storage unit (100) according to claim 8, wherein

each of the plurality of battery cells (200) is provided with poles (210),
each of the plurality of battery cells (200) has a third surface (203) located on a side of the battery cell (200) facing away from the bottom plate (130), and
the poles (210) are disposed on the third surface (203), the poles (210) of each of the plurality of battery cells (200) being disposed to face towards the top plate (140).

13. The energy storage unit (100) according to claim 12, wherein each of the plurality of battery cells (200) comprises an explosion-proof valve (220) disposed on the third surface (203).

14. The energy storage unit (100) according to claim 12, wherein:

the poles (210) comprise a positive pole and a negative pole which are sequentially arranged in the first direction (X),
the energy storage unit (100) comprises a first conductive member (500),
the plurality of battery cells (200) is arranged in a plurality of columns in the second direction (Y), and
in one column of battery cells (200), the positive pole of one of two adjacent battery cells (200) and the negative pole of the other one of the two adjacent battery cells (200) correspond to each other in the second direction (Y) and are connected to each other through the first conductive member (500), the one column of battery cells (200) being sequentially connected in series.

15. The energy storage unit (100) according to one of claims 1 to 14, wherein each of the plurality of battery cells (200) satisfies:

$$50\text{mm} \leqslant D200 \leqslant 120\text{mm};$$

where D200 is a thickness dimension of each of the plurality of battery cells (200) and a thickness direction of each of the plurality of battery cells (200) is the second direction (Y).

16. An energy storage system, comprising the energy storage unit (100) of one of claims 1 to 15, a base frame (600), a cooling chamber (700), and a power distribution chamber (800),

the cooling chamber (700), the energy storage unit (100) and the power distribution chamber (800) being all disposed on the base frame (600),
the cooling chamber (700) being in communication with the energy storage unit (100) to transmit a cooling medium to the energy storage unit (100), and
the power distribution chamber (800) being electrically connected to the energy storage unit (100).

17. The energy storage system according to claim 16, wherein a plurality of energy storage units (100) is disposed in a third direction (Z).

100

140

200

300

120

110

400

130

Z
Y
X

150

FIG. 1

100

140

200

I

H100

110

Z
Y
X

120

L100

D100

FIG. 2

I

FIG. 3

FIG. 4

II

FIG. 5

200

210

220

201 203

Z Y

X

L200

202

H200

D200

FIG. 6

400

420

410

FIG. 7

400 410 420

411 421

FIG. 8

150

FIG. 9

150

FIG. 10

FIG. 11

## INTERNATIONAL SEARCH REPORT

| International application No. |
|---|
| **PCT/CN2023/110292** |

| A. | CLASSIFICATION OF SUBJECT MATTER |
|---|---|

H01M10/613(2014.01)i; H01M10/617(2014.01)i; H01M 10/6556(2014.01)i; H01M 10/6567(2014.01)i; H01M10/625(2014.01)i; H01M 50/209(2021.01)i; H01M 50/249(2021.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 导热, 冷却, 板, 腔, 凸, 流道, 截面积, battery, thermal conduction, cool, plate, cavity, convex, flow channel, cross section area

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116014288 A (XIAMEN HITHIUM ENERGY STORAGE TECHNOLOGY CO., LTD.) 25 April 2023 (2023-04-25) description, paragraphs 60-125, and figures 1-11 | 1-17 |
| X | JP 2018147607 A (SHOWA DENKO K.K.) 20 September 2018 (2018-09-20) description, paragraphs 42-64, and figures 1-8 | 1, 8-17 |
| Y | JP 2018147607 A (SHOWA DENKO K.K.) 20 September 2018 (2018-09-20) description, paragraphs 42-64, and figures 1-8 | 2-7 |
| Y | CN 213366657 U (EVERGRANDE NEW ENERGY TECHNOLOGY (SHENZHEN) CO., LTD.) 04 June 2021 (2021-06-04) description, paragraphs 50-73, and figures 1-6 | 2-7 |
| Y | CN 115498327 A (GREE ELECTRIC APPLIANCES, INC. OF ZHUHAI) 20 December 2022 (2022-12-20) description, paragraphs 42-65, and figure 1 | 6-7 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 November 2023** | **05 November 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/110292**

### C. DOCUMENTS CONSIDERED TO BE RELEVANT

| Category* | Citation of document, with indication, where appropriate, of the relevant passages | Relevant to claim No. |
|---|---|---|
| A | CN 209001082 U (SOUTH CHINA UNIVERSITY OF TECHNOLOGY et al.) 18 June 2019 (2019-06-18) <br> entire document | 1-17 |

Form PCT/ISA/210 (second sheet) (July 2022)

**INTERNATIONAL SEARCH REPORT**
Information on patent family members

| | International application No. |
| --- | --- |
| | **PCT/CN2023/110292** |

| Patent document cited in search report | | | Publication date (day/month/year) | Patent family member(s) | | | Publication date (day/month/year) |
| --- | --- | --- | --- | --- | --- | --- | --- |
| CN | 116014288 | A | 25 April 2023 | None | | | |
| JP | 2018147607 | A | 20 September 2018 | JP | 6994303 | B2 | 14 January 2022 |
| CN | 213366657 | U | 04 June 2021 | None | | | |
| CN | 115498327 | A | 20 December 2022 | None | | | |
| CN | 209001082 | U | 18 June 2019 | None | | | |

Form PCT/ISA/210 (patent family annex) (July 2022)

**EP 4 651 268 A1**

**Patent documents cited in the description**

- CN 202310072841